# EUROPÄISCHE PATENTSCHRIFT

(11) **EP 1 157 601 B1**
(45) Veröffentlichungstag und Bekanntmachung des Hinweises auf die Patenterteilung: **28.07.2004**
(21) Anmeldenummer: 00110854.7
(22) Anmeldetag: 23.05.2000
(51) Int. Cl.: A01C 23/00

(54) **Pumpenaggregat**
Pump unit
Groupe moto-pompe

(43) Veröffentlichungstag der Anmeldung: 28.11.2001
(73) Patentinhaber: Vakutec Gülletechnik GmbH, 4542 Nussbach (AT)
(72) Erfinder: Brunmair, Karl, 4643 Pettenbach (AT)

(56) Entgegenhaltungen:
- DE-A- 19 825 459
- DE-A- 19 901 729
- GB-A- 1 119 752

## Beschreibung

Die Erfindung bezieht sich auf einen Pumpenaggregat gemäss dem Oberbegriff des Anspruches 1.

Aus der EP 0 258 165 B1 ist ein Gülletankwagen mit einem Pumpenaggregat und einem beweglichen Leitungssystem bekannt. Das Leitungssystem ist derart beweglich, dass damit eine am freien Ende befindliche Kreiselpumpe in einen Vorratsbehälter abgesenkt werden kann. Das in die Gülle eingetauchte Pumpenaggregat kann in dieser Stellung den Gülletankwagen befüllen. Zum Ausbringen der Gülle wird das Pumpenaggregat mit Hilfe des beweglichen Leitungssystems in einen Behälter am Ende des Gülletankwagens eingeführt. Der Behälter wird durch Öffnen eines Absperrschiebers geflutet, wodurch die Kreiselpumpe wiederum in Gülle eingetaucht ist und diese ausgebracht werden kann.

Darüber hinaus ist eine Vielzahl von Pumpenaggregaten für Gülletanks bekannt, die unter anderem nach ihren Bauformen unterschieden werden. Eine der Bauformen ist die eines Gülletanks mit Kreiselpumpe. Hier wird bewusst auf die Möglichkeit des Ansaugens der Gülle aus einem Vorratsbehälter verzichtet, weil eine Kreiselpumpe im allgemeinen nicht selbstansaugend ist. Der Gülletank wird vielmehr mittels einer Fremdpumpe befüllt und mit der Kreiselpumpe des Gülletanks wird der Tank entleert und die Gülle ausgebracht. Eine Kreiselpumpe kann zur Ausbringung der Gülle benutzt werden, da aufgrund der Füllhöhe der Gülle im Tank diese von selbst in die Kreiselpumpe läuft. Die Pumpe erhöht den Druck in der Auslaufleitung, so dass am Verteiler der erforderliche Druck ansteht. Die Vorteile dieser Bauform liegen darin, dass der Tank drucklos und die Pumpe unempfindlich ist. Pumpe und Tank sind preiswert in der Herstellung. Die Nachteile sind darin zu sehen, dass die Gülle nicht selbsttätig in den Tank gesaugt werden kann und daher eine leistungsfähige Fremdpumpe erforderlich ist.

Des weiteren sind Tankwagen mit sogenannten Verdrängerpumpen bekannt. Bei dieser Bauform wird der zum Ansaugen erforderliche Unterdruck von der Pumpe nur auf der Saugseite erzeugt, also in der Saugleitung aufgebaut. Die Gülle muss durch die Verdrängerpumpe hindurch gefördert werden und wird in den Tank hineingedrückt. Zum Verteilen der Gülle wird die Förderrichtung umgekehrt und ein Absperrschieber von Ansaugen auf Ausbringen umgestellt, so dass der Tank leergesaugt und die Gülle zum Verteiler hin gepumpt wird. Die Vorteile dieser Bauform liegen darin, dass die Fördermengen exakt bestimmbar und Drücke über 1 bar erzeugbar sind. Der Tank kann drucklos, also preiswert hergestellt sein. Die Pumpe kann aus verhältnismässig grosser Tiefe ansaugen, weil die Tankhöhe nicht zur Saughöhe gerechnet werden muss, denn der Ansaugunterdruck braucht nur in der Saugleitung erzeugt zu werden. Nachteilig ist bei dieser Bauform, dass die Flüssigkeit durch die Verdrängerpumpe gefördert werden muss, so dass Fremdkörper die verhältnismässig teure Verdrängerpumpe zerstören können.

Darüber hinaus sind auch sogenannte Vakuum-Kreiselpumpsysteme bekannt, die bisher so aufgebaut sind, dass zum Saugen nur die Vakuumpumpen - im allgemeinen Kompressoren - eingeschaltet sind, um die Gülle in den Tank zu saugen. Zum Ausbringen wird auf die Kreiselpumpe umgeschaltet und mittels der Kreiselpumpe die Gülle verteilt. Bei dieser Lösung kann durch hohen Druck beim Verteilen mit sogenannten Weitwurfdüsen gearbeitet werden, was mit einer reinen Vakuumpumpe nicht befriedigend möglich ist. Die Vorteile dieser Bauform liegen darin, dass die Pumpe unempfindlich gegenüber Fremdkörpern ist. Beim Saugen kommt die Gülle weder mit dem Kompressor noch mit der Pumpe in Berührung. Nachteilig ist, dass zwei leistungsfähige Pumpen erforderlich sind, und dass der Tank wegen des Saugvorganges als Druckbehälter ausgeführt sein muss. Beim Saugen ist dieses System mit einem Vakuumsystem vergleichbar; es ist demgemäss ein Druckbehälter nötig, beim Ausbringen ist das System mit einem Pumptankwagen vergleichbar. Die Saughöhe ist wie bei den nachstehend beschriebenen Vakuumtankwagen stark begrenzt.

Vakuumtankwagen mit Pumpenaggregaten sind eine weitere weit verbreitete Kategorie. Mittels eines Kompressors wird aus dem Pumpenaggregat Luft abgesaugt. Über den erzeugten Unterdruck wird der Tank komplett unter ein bestimmtes Vakuum gesetzt. Zum Ansaugen der Gülle aus einem Tiefbehälter wird ein Schieber auf der Saugseite geöffnet, so dass auch der daran befindliche Saugschlauch evakuiert wird. Der jetzt bestehende Unterdruck bewirkt, dass Gülle oder eine beliebige andere Flüssigkeit in den Tank gesaugt wird. Zum Verteilen der Gülle wird die Funktion des Kompressors umgeschaltet. Luft wird aus dem Freien angesaugt und in den Tank gedrückt, so dass durch den entstehenden Überdruck die Flüssigkeit aus dem Tank gedrückt und mit Überdruck versprüht wird. Vorteile dieser Bauart sind die einfache und störungsunempfindliche Bauweise. Der Kompressor kommt mit der Gülle nicht in Berührung, daher ist diese Bauform unempfindlich gegenüber Fremdkörpern in der Gülle. Die nicht unerheblichen Nachteile liegen jedoch darin, dass der Tank als Druckbehälter ausgeführt sein muss, demgemäss der Druckbehälterverordnung unterliegt und prüf- sowie genehmigungspflichtig ist. Die Tankhöhe zählt mit zur gesamten Saughöhe, so dass bei tiefen Vorratsbehältern schnell die physikalische Grenze der möglichen Förderhöhe erreicht ist. Ferner ist beim Verteilen der Gülle der Ausbringdruck auf 1 bar begrenzt, da wegen des Sicherheitsstandards der Druckbehälter aus wirtschäftlichen Gründen keine höheren Drücke sinnvoll sind.

Aufgabe der vorliegenden Erfindung ist es, ein Pumpenaggregat der eingangs geschilderten Art zu schaffen, welches die Nachteile der bekannten Bauformen nicht aufweist, und bei dem einfachste Pumpensysteme zum Einsatz kommen. Durch diese Lösung werden die Vorteile der bekannten Pumpenaggregate erzielt, ohne jedoch deren Nachteile in Kauf nehmen zu müssen.

Diese Aufgabe wird durch ein Pumpenaggregat mit den Merkmalen des Anspruches 1 gelöst. Weitere vorteilhafte Merkmale entnimmt man den abhängigen Ansprüchen.

Anhand der Zeichnungen wird mit Hilfe von Ausführungsbeispielen die Erfindung noch näher erläutert.

Es zeigt
- Figur 1: eine schematische Ansicht der Pumpenrotoren;
- Figur 2: ein Pumpenaggregat bei Inbetriebnahme;
- Figur 3: ein Pumpenaggregat in Ansaugfunktion;
- Figur 4: ein Pumpenaggregat in Füllfunktion;
- Figur 5: einen schematisch dargestellten Gülletankwagen mit einem Pumpenaggregat und
- Figur 6: eine Pumpstation mit einem Pumpenaggregat.

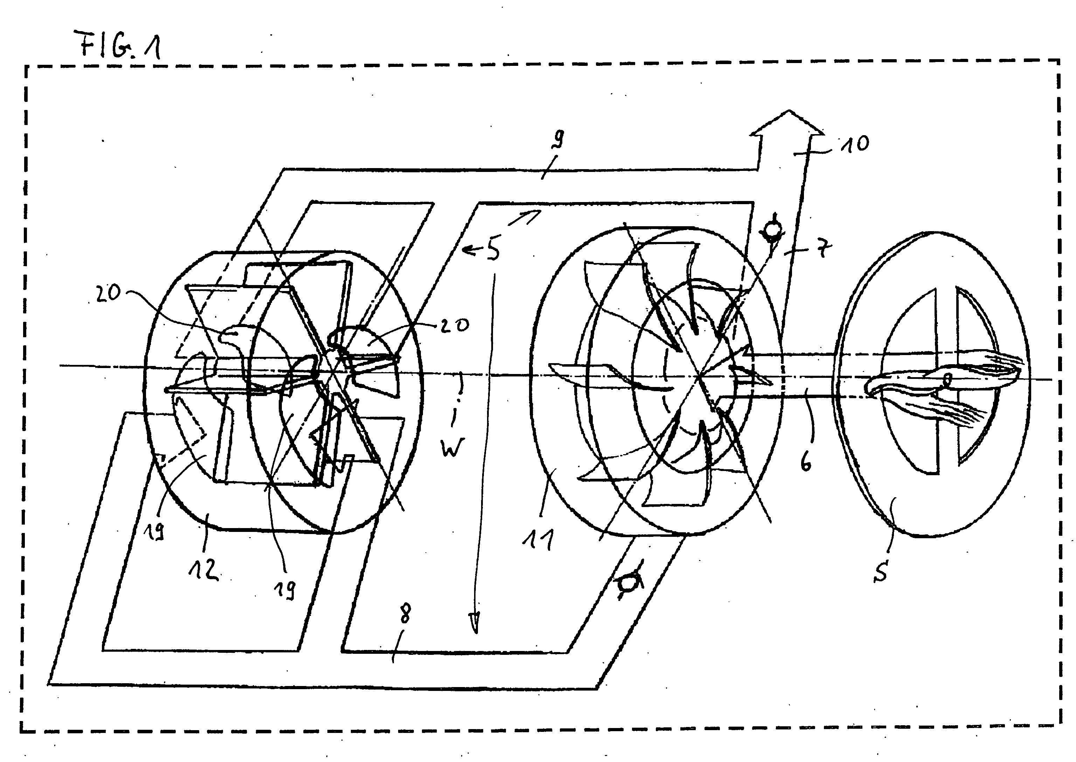

In Figur 1 wird das Prinzip der Erfindung veranschaulicht, bei dem die beiden Pumpen 11 und 12 bevorzugt auf einer gemeinsamen Welle W angeordnet sind, wobei in dem Leitungssystem 5 mit seinen Abschnitten 6, 7, 8, 9 und 10 der Flussverlauf der zu fördernden Medien mit Pfeilen angedeutet ist. In diesem Ausführungsbeispiel ist eine Flüssigkeitsringpumpe 12 jeweils auf beiden Stirnseiten mit Einlass- 19 bzw. Auslassöffnungen 20 versehen, um die Förderleistung zu erhöhen. Ferner ist auf der Ansaugseite der Kreiselpumpe 11 ein Schneidwerk S vorgesehen, welches ebenfalls auf der gemeinsamen Welle W angeordnet ist.

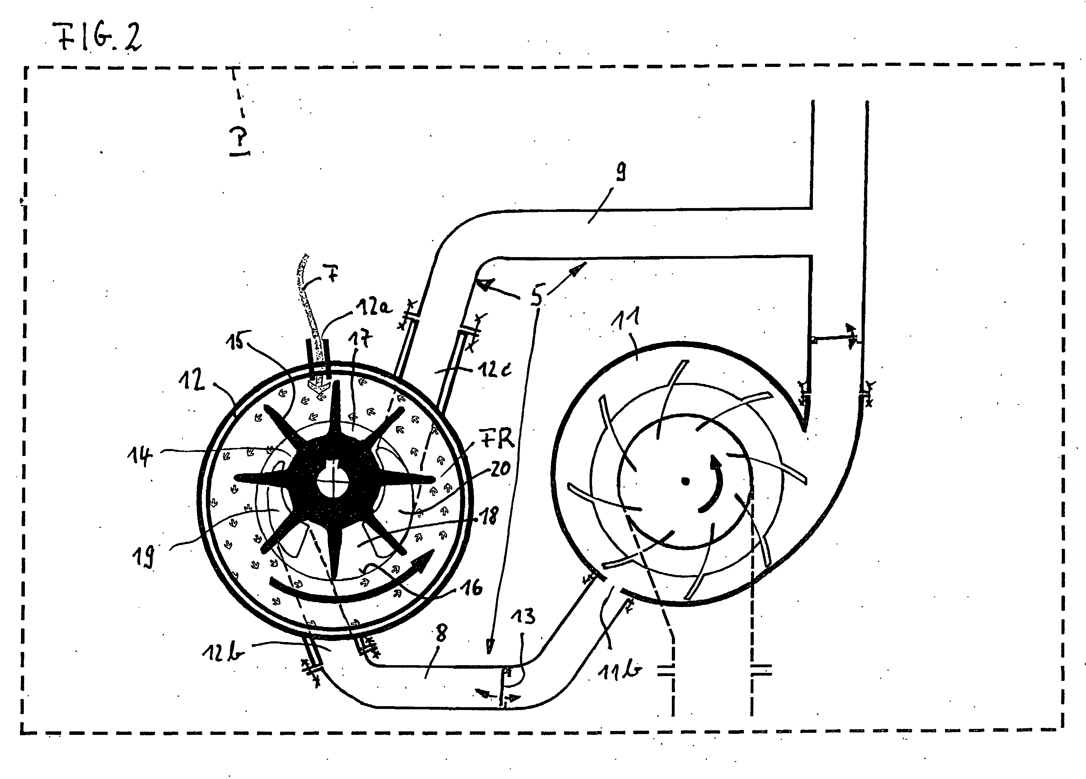

Figur 2 zeigt das Pumpenaggregat P in schematisierter Darstellung während des Auffüllvorganges. Das Pumpenaggregat P weist zwei Pumpen, nämlich eine Kreiselpumpe 11 und eine sogenannte Flüssigkeitsringpumpe 12 auf. Beide Pumpen 11 und 12 sind in ein Leitungssystem 5 eingebunden und miteinander über eine Entlüftungsleitung 8 verbunden, die Teil des Leitungssystems 5 ist. Vor einer ersten Inbetriebnahme oder nach einer Betriebsunterbrechung, welche eine Entleerung der Flüssigkeitsringpumpe 12 erfordert hatte, ist diese über eine Eingangsöffnung 12a mit Flüssigkeit F, beispielsweise Wasser zu füllen.

Die Kreiselpumpe 11 weist einen Ausgang 11b auf, der mit einem Abschnitt des Leitungssystems 5 verbunden ist, welcher zumindest in einem Betriebszustand, nämlich in dem zur Vorbereitung des Ansaugens von Flüssigkeit, als Entlüftungsleitung 8 zu bezeichnen ist. Die Entlüftungsleitung 8 endet mit ihrem anderen Ende in der Flüssigkeitsringpumpe 12, die dazu einen Eingang 12b aufweist, der in einer Eingangsöffnung 19 mündet. In der Entlüftungsleitung 8 befindet sich ein Ventil 13, welches den Rückfluss der in der Flüssigkeitsringpumpe 12 befindlichen Flüssigkeit F verhindert und das sich in der Evakuierungsphase durch beim Ansaugbetrieb entstehenden Unterdruck selbsttätig öffnet. Weiterer Bestandteil der Flüssigkeitsringpumpe 12 ist der Rotor 14 mit Schaufeln bzw. Flügeln 15. Der Rotor 14 ist exzentrisch in der Innenkammer 16 der Flüssigkeitsringpumpe 12 gelagert. Bei der Rotation des exzentrisch gelagerten Rotors 14 wird die in der Innenkammer 16 der Flüssigkeitsringpumpe 12 befindliche Flüssigkeit F mitbewegt und bildet - wie in den Figuren 2 bis 4 dargestellt - an der Innenwand der Innenkammer 16 einen abdichtenden Flüssigkeitsring FR, in welchen die Flügel 15 des Rotors 14 aufgrund dessen exzentrischer Lagerung unterschiedlich tief eintauchen. Durch die in den Flüssigkeitsring FR unterschiedlich tief eintauchenden Flügel 15 des exzentrisch gelagerten Rotors 14 werden Hohlräume 17 und 18 mit von der jeweiligen Rotorstellung abhängigen unterschiedlichen Volumina gebildet. Die Flüssigkeitsringpumpe 12 weist ferner stirnseitig zwei Schlitzöffnungen 19 und 20 auf, welche mit dem Leitungssystem 5 des Pumpenaggregates P verbunden sind, nämlich die Einlassöffnung 19 über den Eingang 12b mit der Entlüftungsleitung 8 und die Auslassöffnung 20 über den Ausgang 12c mit der Auslassleitung 9.

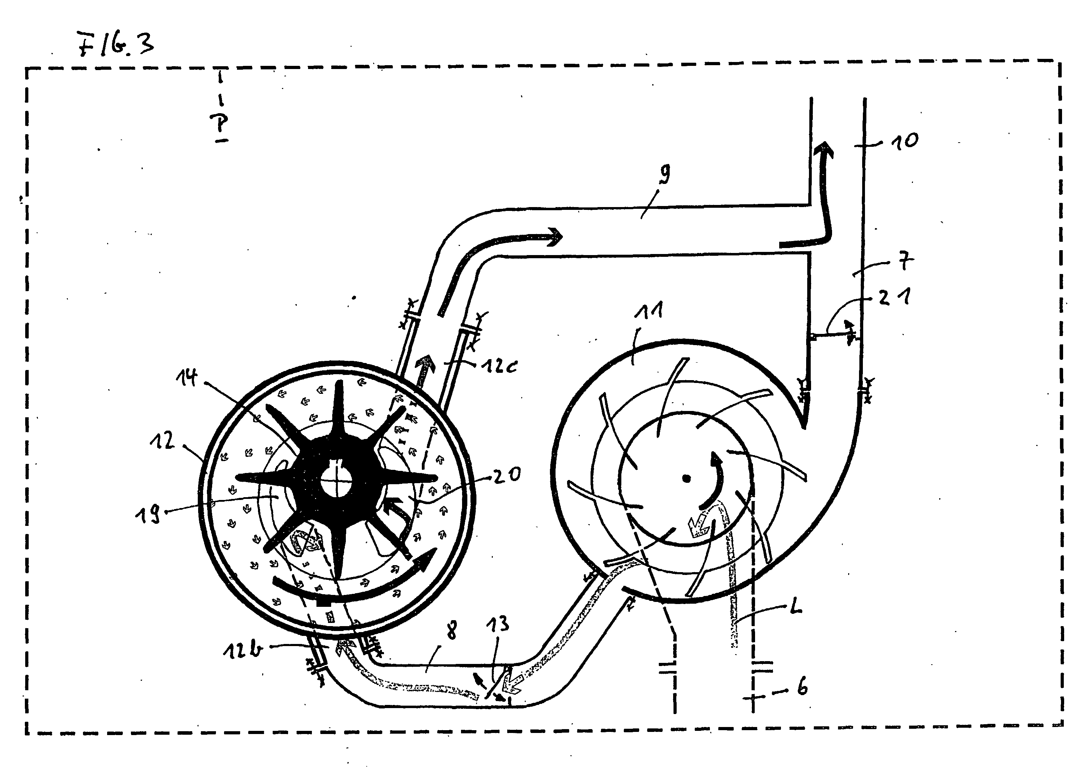

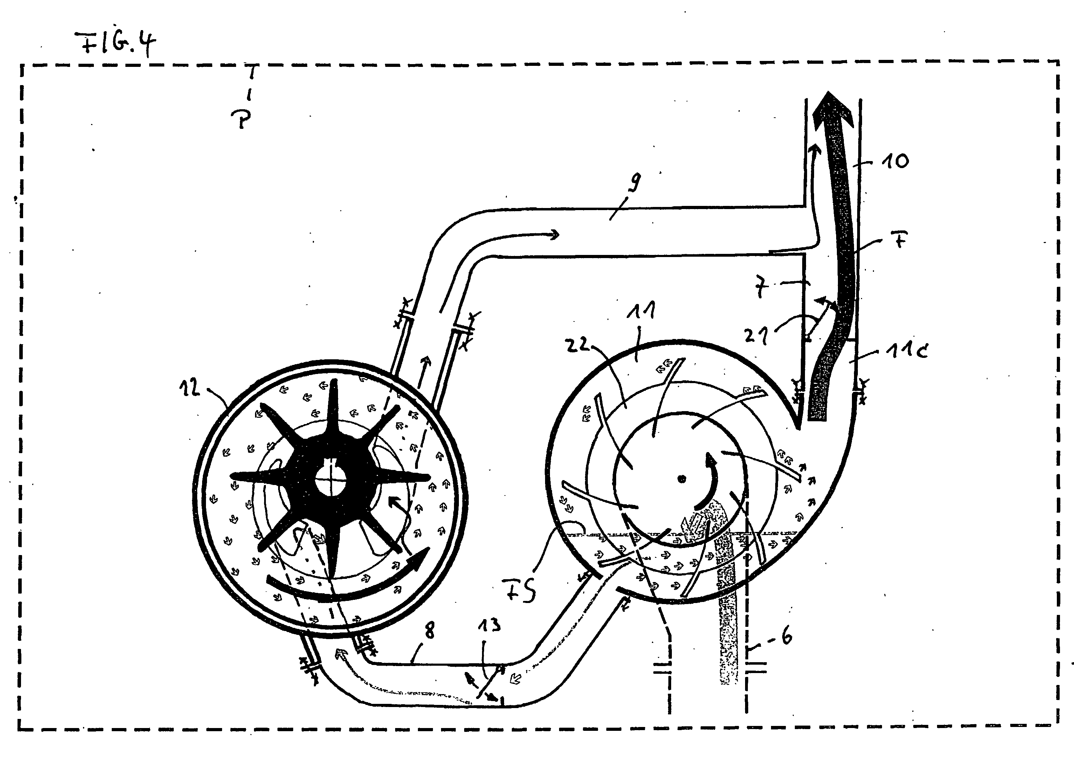

Die in Figur 3 schematisch dargestellte Funktion in der Evakuierungsphase dieser Flüssigkeitsringpumpe 12 beruht darauf, dass durch die Rotation des Rotors 14 und die entsprechende Positionierung der beiden stirnseitigen Öffnungen 19 und 20 am Eingang 12b der Flüssigkeitsringpumpe 12 Unterdruck und an deren Ausgang 12c Druck entsteht. Dies ruft wiederum in der Entlüftungsleitung 8 Unterdruck hervor, so dass die Kreiselpumpe 11 und die Ansaugleitung 6 entlüftet werden, bis anstelle von Luft L Flüssigkeit F aus dem nicht dargestellten Reservoir in die Kreiselpumpe 11 gelangt und diese ihre Pumpwirkung entfalten kann, wie dies später in Figur 4 verdeutlicht wird. Der über die andere Öffnung 20 am Ausgang 12c der Flüssigkeitsringpumpe 12 anstehende Druck beaufschlagt über die Auslassleitung 9 die Füllleitung 10. Da somit die Füllleitung 10 ebenfalls unter Druck steht, in der Kreiselpumpe 11 jedoch Unterdruck herrscht, ist ein weiteres Ventil 21, welches sich in der Kreiselpumpenauslassleitung 7 der Kreiselpumpe 11 befindet, selbsttätig geschlossen.

In Figur 4 ist die Funktion des Pumpenaggregates P in der Übergangsphase von Evakuieren auf Fördern dargestellt. Nachdem die Kreiselpumpe 11 entlüftet und eine hinreichende Flüssigkeitssäule FS erzeugt ist, beginnt die Kreiselpumpe 11 selbsttätig mit dem Fördern des zu fördernden Mediums, d. h. die Kreiselpumpe 1 übernimmt aufgrund ihrer höheren Volumenleistung die eigentliche Funktion des Pumpens. Dabei sei klargestellt, dass die Kreiselpumpe 11 bereits ab Betriebsbeginn arbeitet, d. h. dass der Rotor 22 der Kreiselpumpe 11 zwar bereits rotiert, wenn die Evakuierungsphase beginnt, aber da sie nicht selbstansaugend ist, kann sie noch nicht wirkungsvoll fördern. Diese Funktion übernimmt sie, sobald eine hinreichende Flüssigkeitssäule FS in ihrem Innern aufgebaut ist. Sobald dies geschehen ist, erzeugt die Kreiselpumpe 11 Flüssigkeitsdruck an ihrer Ausgangsöffnung 11c und in der Kreiselpumpenauslassleitung 7. Durch die strömende Flüssigkeit F öffnet sich das Ventil 21, so dass die Flüssigkeit F durch die Füllleitung 10 gefördert wird. Geringe Mengen der geförderten Flüssigkeit F gelangen auch über die Flüssigkeitsringpumpe 12 und deren Auslassleitung 9 in die Füllleitung 10. Diese Teilmenge der Flüssigkeit F übernimmt die Abdichtungsfunktion in der Flüssigkeitsringpumpe 12 und da sie ständig erneuert wird, übernimmt sie auch die Kühlung der Flüssigkeitsringpumpe 12.

Ein vorteilhafter Effekt bei diesem ständigen Parallelbetrieb von Kreisel- 11 und Flüssigkeitsringpumpe 12 ist die Unanfälligkeit gegenüber Luftblasen im zu fördernden Medium, da zwangsläufig dauernd eine Entlüftung des Pumpenaggregates P erfolgt. Besonders vorteilhaft ist eine Bauform, bei welcher beide Pumpen 11 und 12 in einem gemeinsamen Gehäuse G angeordnet und von einer gemeinsamen Welle W angetrieben werden.

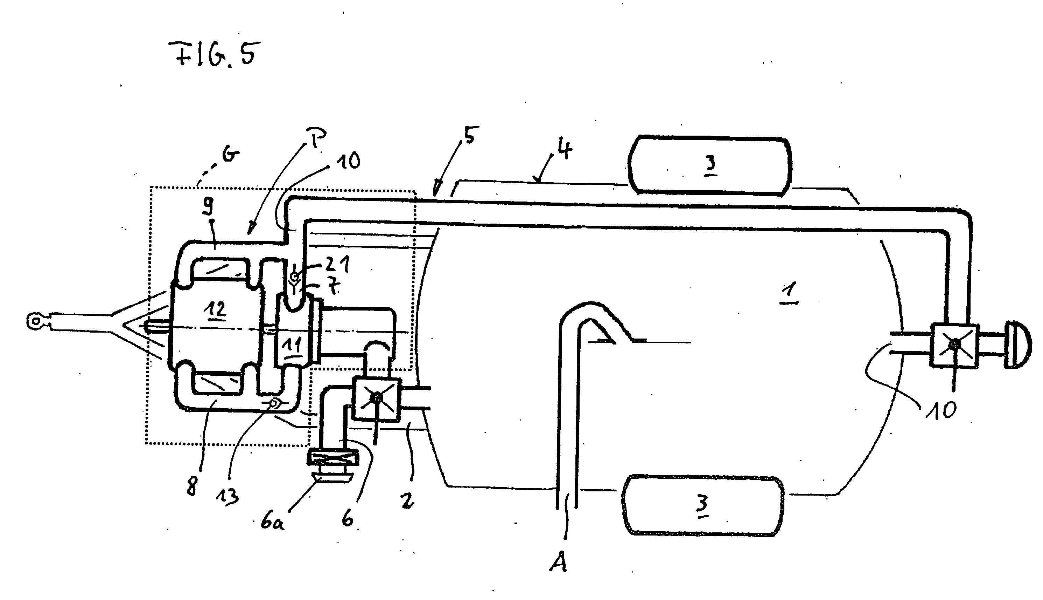

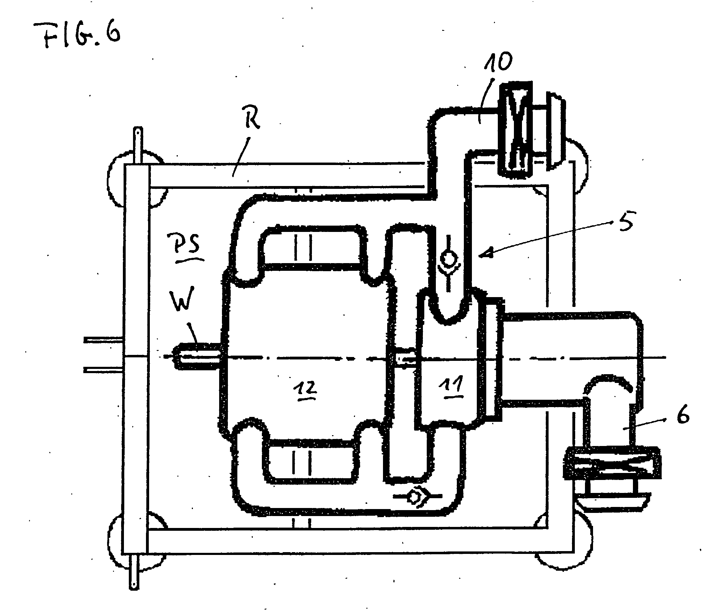

Ein in Figur 5 schematisch dargestellter Gülletankwagen 1 stellt einen bevorzugten Anwendungsfall für das erfindungsgemässe Pumpenaggregat P dar. Der dort gezeigte Gülletankwagen 1 weist ein Fahrgestell 2 mit Rädern 3 auf. Hier ist das Fahrgestell 2 als Anhänger ausgebildet, aber die Erfindung kann in nicht dargestellter Weise auch bei einem sogenannten Selbstfahrer, einem Containertank, bei einer separaten Pumpstation (siehe Figur 6) oder ähnlichem mit Erfolg eingesetzt werden. Das Fahrgestell 2 trägt einen Tank 4, welcher nicht als Druckbehälter ausgebildet ist, da beim erfmdungsgemässen Betrieb kein Über- oder Unterdruck im Tank 4 auftritt. Damit dies sichergestellt ist, befindet sich im Tank 4 eine Ausgleichsöffnung A, mittels der eventuell auftretende Druckdifferenzen zwischen dem Inneren des Tanks 4 und der Umgebung ständig ausgeglichen werden. Der Gülletankwagen 1 verfügt über ein Leitungssystem 5, welches in mehrere Abschnitte 6, 7, 8, 9, 10 aufgeteilt ist. Abschnitt 6 ist als Saugschlauch ausgebildet und verfügt über einen Ansaugstutzen 6a, welcher in einen Vorratsbehälter - der hier nicht dargestellt ist - eingetaucht wird, um von dort Gülle in den Tank 4 des Gülletankwagens 1 fördern zu können. Der Saugschlauch 6 ist in das Leitungssystem 5 über eine Kreiselpumpe 11 eingebunden, welche einerseits über einen Leitungsabschnitt verfügt, welcher als Kreiselpumpenauslassleitung 7 bezeichnet ist. Die Kreiselpumpe 11 ist ferner mittels eines weiteren Leitungsabschnittes, welcher die Bezeichnung Entlüftungsleitung 8 trägt, mit einer sogenannten Flüssigkeitsringpumpe 12 verbunden. Diese Flüssigkeitsringpumpe 12 weist auf ihrer Auslassseite einen Leitungsabschnitt auf, der als Auslassleitung 9 bezeichnet ist. Sowohl die Auslassleitung 9 als auch die Kreiselpumpenauslassleitung 7 münden gemeinsam in einen weiteren Abschnitt des Leitungssystems 5, welcher als Füllleitung 10 bezeichnet ist und mit seinem freien Ende in den Tank 4 einmündet.

Die Kreiselpumpe 11 und die Flüssigkeitsringpumpe 12 sind Bestandteile des Pumpenaggregates P, welches durch diese Kombination aus Kreiselpumpe 11 und Flüssigkeitsringpumpe 12 gebildet wird, wobei die Flüssigkeitsringpumpe 12 eine Entlüftungspumpe mit ganz besonderen Vorteilen darstellt.

In Figur 6 ist schliesslich eine separate Pumpstation PS dargestellt, welche in den unterschiedlichsten Bauformen hergestellt sein kann. Über einen nicht dargestellten Antrieb wird eine Welle W in Rotation versetzt. Auf der Welle W befinden sich die Kreiselpumpe 11 sowie die Flüssigkeitsringpumpe 12, die gemeinsam betrieben werden und mittels eines Leitungssystems 5 miteinander verbunden sind. Ferner sind noch die Ansaugleitung 6 und die Füllleitung 10 dargestellt. Die Funktion der Pumpstation PS ist sinngemäss den vorausgegangenen Beschreibungen zu entnehmen. Es versteht sich, dass die Pumpstation PS allein einsetzbar und mobil ist, dazu ist sie auf einem Rahmen R aufgebaut. Sie kann also an jeden beliebigen Ort transportiert und dort eingesetzt werden. Demgemäss kann die Pumpstation PS als separates Aggregat auch einer Umfüllstation zugeordnet werden, oder - ähnlich wie in Figur 5 gezeigt - an einem Tankfahrzeug Verwendung finden.

## Patentansprüche

1. Pumpenaggregat mit einer Kombination aus Kreiselpumpe (11) und Entlüftungspumpe (12) sowie mit einem Leitungssystem zum Ansaugen und Fördern eines Mediums und mit einem Ventilsystem (13, 21), **dadurch gekennzeichnet, dass** das Ventilsystem (13, 21) permanent und selbsttätig Evakuierungs- und Förderphasen steuert, und dass die Entlüftungspumpe als sogenannte Flüssigkeitsringpumpe (12) ausgebildet ist, welche mit der Kreiselpumpe (11) parallel betrieben wird.

2. Pumpenaggregat nach Anspruch 1, **dadurch gekennzeichnet, dass** das Leitungssystem (5) eine Kreiselpumpenauslassleitung (7) aufweist, welche der Kreiselpumpe (11) zugeordnet ist, und in der wenigstens ein Ventil (21) angeordnet ist, welches in der Evakuierungsphase geschlossen und in der Förderphase geöffnet ist.

3. Pumpenaggregat nach Anspruch 1, **dadurch gekennzeichnet, dass** das Leitungssystem (5) eine Entlüftungsleitung (8) aufweist, welche die Kreiselpumpe (11) mit der Flüssigkeitsringpumpe (12) verbindet und in der ein Ventil (13) angeordnet ist, welches den Rückfluss des Mediums (FR) aus der Flüssigkeitsringpumpe (12) verhindert und den Durchfluss des Fördermediums (L/F) ermöglicht.

4. Pumpenaggregat nach Anspruch 1, **dadurch gekennzeichnet, dass** die Kreiselpumpe (11) und die Flüssigkeitsringpumpe (12) auf einer gemeinsamen Welle (W) angeordnet sind.

5. Pumpenaggregat nach Anspruch 1, **dadurch gekennzeichnet, dass** die Kreiselpumpe (11) und die Flüssigkeitsringpumpe (12) in einem gemeinsamen Gehäuse (G) angeordnet sind.

6. Pumpenaggregat nach Anspruch 5, **dadurch gekennzeichnet, dass** das gemeinsame Gehäuse (G) Teile (6, 7,8, 9) des Leitungssystems (5) enthält.

7. Pumpenaggregat nach Anspruch 1, **dadurch gekennzeichnet, dass** das Pumpenaggregat (P) Bestandteil eines Gülletankwagens (1) ist.

8. Pumpenaggregat nach Anspruch 1, **dadurch gekennzeichnet, dass** das Pumpenaggregat (P) Bestandteil einer Pumpstation (PS) ist.

9. Pumpenaggregat nach Anspruch 1, **dadurch gekennzeichnet, dass** auf der Saugseite der Kreiselpumpe (11) ein Schneidwerk (S) angeordnet ist.

## Claims

1. Pump unit incorporating a combination of centrifugal pump (11) and venting pump (12), having a pipe system (5) for sucking in and delivering a medium and a valve system (13, 21), **characterised in that** the valve system (13, 21) permanently and automatically controls evacuation and delivery phases and the venting pump is designed as a so-called liquid ring pump (12) which is operated in parallel with the centrifugal pump (11).

2. Pump unit as claimed in claim 1, **characterised in that** the pipe system (5) has a centrifugal pump outlet pipe (7) co-operating with the centrifugal pump (11), in which is disposed at least one valve (21) which is closed during the evacuation phase and opened during the delivery phase.

3. Pump unit as claimed in claim 1, **characterised in that** the pipe system (5) has a venting pipe (8), which connects the centrifugal pump (11) to the liquid ring pump (12) and is provided with a valve (13) which prevents the medium (FR) from flowing back out of the liquid ring pump (12) and enables the delivery medium (L/F) to flow.

4. Pump unit as claimed in claim 1, **characterised in that** the centrifugal pump (11) and the liquid ring pump (12) are disposed on a common shaft (W).

5. Pump unit as claimed in claim 1, **characterised in that** the centrifugal pump (11) and the liquid ring pump (12) are disposed in a common housing (G).

6. Pump unit as claimed in claim 5, **characterised in that** the common housing (G) contains parts (6, 7, 8, 9) of the pipe system (5).

7. Pump unit as claimed in claim 1, **characterised in that** the pump unit (P) is an integral part of a slurry tanker (1).

8. Pump unit as claimed in claim 1, **characterised in that** the pump unit (P) is an integral part of a pumping station (PS).

9. Pump unit as claimed in claim 1, **characterised in that** a cutter system (S) is disposed at the suction end of the centrifugal pump (11).

## Revendications

1. Agencement de pompes avec une combinaison constituée d'une pompe centrifuge (11) et d'une pompe d'aération (12) et avec un système de conduits (5) pour aspirer et convoyer un milieu et avec un système de soupapes (13, 21), **caractérisé en ce que** le système de soupapes (13, 21) commande d'une manière permanente et automatiquement les phases d'évacuation et de convoyage, et **en ce que** la pompe d'aération est réalisée comme soi-disant pompe à anneau de liquide (12) qui est amenée à fonctionner parallèlement avec la pompe centrifuge (11).

2. Agencement de pompes selon la revendication 1, **caractérisé en ce que** le système de conduits (5) présente un conduit de sortie de pompe centrifuge (7), qui est associé à la pompe centrifuge (11), et dans lequel est disposée au moins une soupape (21) qui, en phase d'évacuation, est fermée et, en phase de convoyage, est ouverte.

3. Agencement de pompes selon la revendication 1, **caractérisé en ce que** le système de conduits (5) présente un conduit d'aération (8) qui relie la pompe centrifuge (11) à la pompe à anneau de liquide (12) et dans lequel est disposée une soupape (13) qui empêche le reflux du milieu (FR) de la pompe à anneau de liquide (12) et qui permet l'écoulement traversant du milieu de convoyage (L/F).

4. Agencement de pompes selon la revendication 1, **caractérisé en ce que** la pompe centrifuge (11) et la pompe à anneau de liquide (12) sont disposées sur un arbre commun (W).

5. Agencement de pompes selon la revendication 1, **caractérisé en ce que** la pompe centrifuge (11) et la pompe à anneau de liquide (12) sont disposées dans un carter commun (G).

6. Agencement de pompes selon la revendication 5, **caractérisé en ce que** le carter commun (G) comporte des parties (6, 7, 8, 9) du système de conduits (5).

7. Agencement de pompes selon la revendication 1, **caractérisé en ce que** l'agencement de pompes (P) fait partie d'un véhicule-citerne de lisier (1).

8. Agencement de pompes selon la revendication 1, **caractérisé en ce que** l'agencement de pompes (P) fait partie d'un poste de pompage (PS).

9. Agencement de pompes selon la revendication 1, **caractérisé en ce qu'**il est disposé sur le côté d'aspiration de la pompe centrifuge (11) un mécanisme de coupe (S).
